# EUROPEAN PATENT APPLICATION

(11) **EP 2 098 602 A1**
(43) Date of publication of application: **09.09.2009**
(21) Application number: 07859942.0
(22) Date of filing: 21.12.2007
(51) Int. Cl.: C22B 1/248, C21C 5/28, C21C 7/04, C21C 7/076, C22B 1/00, C22B 1/16, C22B 1/243

(54) **IRON-BASED POWDER MATERIAL, METHOD FOR PRODUCING THE SAME, AND BRIQUETTE FOR STEELMAKING MATERIAL**

(30) Priority: 28.12.2006 JP 2006355573
(71) Applicant: JTEKT Corporation, Osaka-shi Osaka 542-8502 (JP)
(72) Inventor: MATSUDA, Mitsuma, Osaka-shi Osaka 542-8502 (JP); NOUCHI, Soichi, Osaka-shi Osaka 542-8502 (JP); MIYAGAWA, Naoki, Osaka-shi Osaka 542-8502 (JP)
(74) Representative: Sajda, Wolf E.
(86) International application number: PCT/JP2007/074662
(87) International publication number: WO 2008/081750

(57) **Abstract**

A ferrous powder material which may be compression molded by a compression molding press and may be recycled as a valuable resource is provided. The ferrous powder material contains grinding chips of a ferrous metal. The ferrous powder material is obtained by stirringly mixing a sludge mass with calcined lime and water, the sludge mass comprising the grinding chips of the ferrous mental and a grinding fluid containing oil and water.

## Description

### Technical Field

The present invention relates to a ferrous powder material and a manufacturing method thereof as well as to a briquette for use as steelmaking material. More particularly, the invention relates to a technique for effective use of grinding chips resulting from grinding a ferrous metal.

### Background Art

The grinding chips resulting from grinding a ferrous metal such as bearing steel or carburizing steel (or carburized steel) (hereinafter, the term "grinding" is used based on a concept including polishing, superpolishing, lapping and the like) is collected in the form of a cotton-like (fibrous) aggregate including: a grinding fluid containing water and oil; abrasive grains and the like. Since the cotton-like aggregate is rich in pure iron, attempts have been made for reusing the aggregate as a steelmaking material.
However, the cotton-like aggregate contains a large amount of water. Therefore, if the cotton-like aggregate is directly charged into a blast furnace, the water causes bumping (phreatic explosion). It may be contemplated to remove the water in the cotton-like aggregate by centrifugation or the like. In this case, however, the oil contained in the cotton-like aggregate is also removed along with the water and hence, the pure iron as a component of the grinding chips are converted to iron oxide due to the self heating of the cotton-like aggregate.
In order to reuse the cotton-like aggregate as the steelmaking material, therefore, the aggregate must be reduced. The recycling of the aggregate ends up with high cost because of the use of a reducing agent and the like.

On the other hand, the grinding chips with the oil adhered thereto are less prone to adhere tightly to each other. Hence, if the cotton-like aggregate is compression molded in as-is state, the aggregate cannot be solidified to a desired strength. In the case of a cotton-like aggregate containing a large quantity of grinding chip of a ferrous metal having a carbon content of 0.2 wt% or more, the aggregate being compressed exhibits great springback and hence, it is difficult to solidify such an aggregate to a desired strength even by compression molding the aggregate.
Accordingly, if the cotton-like aggregate so compression molded is charged into the blast furnace, the aggregate is scatteringly carried upward so that most of the aggregate is collected by a dust collector.

In addition, it is difficult for a hammer mill or the like to crush the fibrous grinding chip contained in the cotton-like aggregate and hence, the cotton-like aggregate cannot be sheared finely. This also makes it difficult to process the cotton-like aggregate into a briquette or the like.
In this connection, the cotton-like aggregate was not heretofore put to reuse but committed to a waste processing contractor for landfill disposal.

On the other hand, the present applicant has made various proposals on the briquette comprising a brittle compact and a manufacturing method thereof. The brittle compact is formed of the cotton-like aggregate which is compression molded for roughly shearing the fibrous grinding chips and removing excessive water and oil therefrom (see, for example, Japanese Unexamined Patent Publication JP-A-2002-121 625 (Patent Gazette No. 3 711 045), Japanese Unexamined Patent Publication JP-A-2002-146 445 (Patent Gazette No. 3 745 657) and Japanese Unexamined Patent Publication JP-A-2002-194 449 (Patent Gazette No. 3 746 978)).

For instance, Japanese Unexamined Patent Publication JP-A-2002-121 625 (Patent Gazette No. 3 711 045) discloses a briquette for use as steelmaking material, which is a dry briquette containing powdery pure iron and oil. The briquette is obtained by solidifying a brittle compact by impregnating the compact with an inorganic solidification assistant. The brittle compact is formed by compression molding cotton-like aggregate including ferrous-metal grinding chips and a grinding fluid containing oil and water. The brittle compact is removed of excessive water and oil, retaining 1 to 5 wt% of oil for preventing the oxidization of the pure iron.

According to the briquette of the patent gazette, the rough shearing of the fibrous grinding chips, which has conventionally been a difficult task, may be easily accomplished by compression molding the cotton-like aggregate. In addition, the briquette is capable of preventing the oxidization of the pure iron as the component of the grinding chips because the brittle compact contains a predetermined amount of oil for anti-oxidization purpose. Accordingly, the briquette provides for the reuse of the cotton-like aggregate as a high-quality steelmaking material, thus contributing to the environmental conservation as well as to the reduction of disposal cost of the grinding chips.

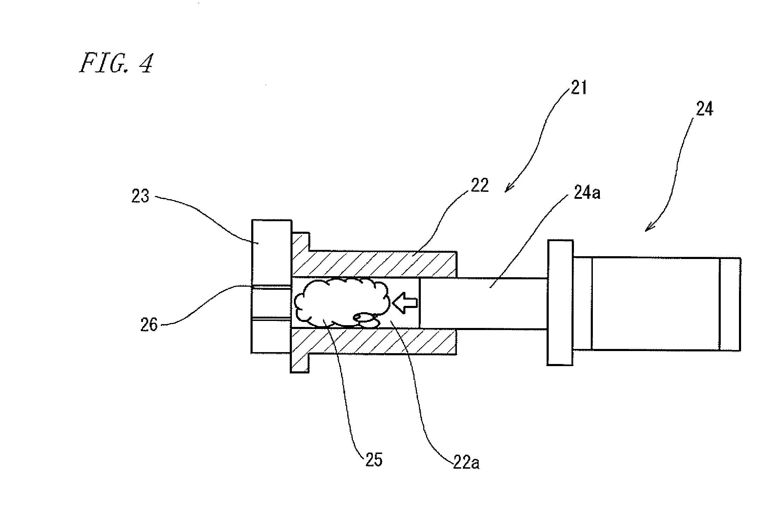

By the way, the compression molding of the above cotton-like aggregate is performed using a compression molding press shown in FIG. 4. FIG. 4 illustrates the compression molding press applicable to the compression molding of the cotton-like aggregate.
The compression molding press 21 comprises: a cylindrical compressing portion 22; a gate 23 disposed at a first end of the compressing portion 22 in a manner to be able to open or close a first-end opening of the compressing portion 22; and a hydraulic cylinder 24 disposed at a second end of the compressing portion 22 and adapted to slidably move a pusher shaft 24a thereof in a chamber 22a of the compressing portion 22.
A cotton-like aggregate 25 fed into the chamber 22a of the compressing portion 22 via an aperture (not shown) formed in a circumferential wall of the compressing portion 22 may be compression molded by drivably advancing the pusher shaft 24a. In this process, excessive water and oil contained in the cotton-like aggregate are discharged from the chamber via a fluid discharge path 26 formed through the gate 23 (In some case, the fluid discharge path may be formed through the circumferential wall of the compressing portion 22 at place near the gate 23). Thus is obtained a brittle compact containing predetermined percentages of oil and water as removed of the excessive water and oil.

However, the aforementioned cotton-like aggregates include one which has such a high oil content of 13 wt% or more. Such an aggregate assumes a sludge-like nature (hereinafter, also referred to as "sludge mass") because the aggregate has such a high viscosity as to disable the separation of the grinding chips from the grinding fluid. It is difficult for the aforementioned compression molding press to compression mold this sludge mass.
In the sludge mass, the oil in the grinding fluid binds to the grinding chips so strongly that the compression process cannot squeeze out the grinding fluid alone. If such a sludge mass is subjected to compression molding, the sludge of cotton-like aggregate per se erupts from the fluid discharge path. Thus, the compression molding of the sludge mass fails. Accordingly, there is no choice but to commit the sludge of cotton-like aggregate to a special processor for recycling process.

On the other hand, there is known a method of converting the sludge mass to a powder mass having a nearly practicable compression-moldability by removing the oil and water contained in the sludge mass. As such a method, there are proposed a method wherein the sludge mass is washed for removing the oil and then is dried, and a method wherein the sludge mass is fully dried.

However, the former method requires equipment for washing and filtering the sludge mass. In addition, the former method involves a large number of steps, taking a great amount of time and effort. On the other hand, the latter method requires equipment for heating the sludge mass although the equipment is not so large as that of the former method. The heating process consumes an enormous amount of energy.

### Disclosure of the Invention

In view of the foregoing, the invention seeks to provide a ferrous powder material and a manufacturing method thereof, as well as a briquette for use as steelmaking material, the ferrous powder material which may be compression molded by a compression molding press and may be recycled as a valuable resource.

A ferrous powder material according to the invention is a ferrous powder material comprising grinding chips of a ferrous metal, and is prepared by stirringly mixing a sludge mass with calcined lime and water, the sludge mass comprising the grinding chips of the ferrous metal and a grinding fluid containing oil and water.

The ferrous powder material of the invention is prepared by stirringly mixing the sludge mass with calcined lime and water, the sludge mass comprising the grinding chips of the ferrous metal and the grinding fluid containing oil and water. In this process, calcined lime reacts with water so as to generate calcium hydroxide (hydrated lime) and an enormous amount of heat. The heat raises the temperature of the sludge mass, causing much of the water contained in the sludge mass to evaporate and much of the oil to be enclosed by the hydrated lime so generated.
Hence, the sludge mass is powderized with the progress of the reaction between the calcined lime and water. The resultant powdery mass (ferrous powder material) can be compression molded by the conventional compression molding press so that the brittle compact may be formed from the above ferrous powder material.

It is preferred to prepare the ferrous powder material by stirringly mixing the sludge mass with calcined lime, aluminum powder and water. If aluminum powder is added to the reaction of calcined lime and water, the aforementioned exothermic reaction becomes more vigorous so that the sludge mass may be efficiently and quickly powderized. This is because the aluminum powder generates an enormous amount of heat when generating hydrogen by reacting with water in an aqueous solution of alkaline hydrated lime.

It is preferred that the calcined lime comprises particles having a particle size of 1 mm to 3 mm. If the calcined lime having high reactivity is in the form of powder having a small particle size, the powdery calcined lime reacts with vapor in the atmosphere during storage or transportation so that the powdery calcined lime becomes unable to develop an adequate exothermic reaction when used. On the other hand, if the calcined lime is in the form of a large block, the block-like calcined lime is able to suppress such a prior-to-use reaction.
However, if the block-like calcined lime per se is used, the calcined lime has such a small area of contact with water, thus failing to generate a required amount of heat. Therefore, the calcined lime blocks must be crushed before use, which is cumbersome. In contrast, the calcined lime particles having the particle size of 1 mm to 3 mm are able to suppress the unwanted reaction during storage and transportation and to attain an increased area of contact with water for adequately reacting with water.

A manufacturing method of a ferrous powder material according to a first aspect of the invention comprises the following steps:
adding calcined lime and water to a sludge mass comprising grinding chips of a ferrous metal and a grinding fluid containing oil and water; and
stirring the sludge mass admixed with calcined lime and water.

In the manufacturing method of the ferrous powder material according to the first aspect of the invention, calcined lime and water are added to the sludge mass comprising the grinding chips of the ferrous metal and the grinding fluid containing oil and water and then, the sludge mass admixed with calcined lime and water is stirred.
Hence, calcined lime reacts with water so as to generate hydrated lime and an enormous amount of heat. The heat raises the temperature of the sludge mass, causing much of the water contained in the sludge mass to evaporate and much of the oil to be enclosed by the hydrated lime so generated. Hence, the sludge mass is powderized with the progress of the reaction between the calcined lime and water. The resultant powdery mass (ferrous powder material) can be compression molded by the conventional compression molding press so that the brittle compact may be formed from the above ferrous powder material.

Because of the same reason as the above, it is preferred that aluminum powder along with the calcined lime and water are added to the sludge mass. It is also preferred that the calcined lime comprises particles having a particle size of 1 mm to 3 mm.

A manufacturing method of a ferrous powder material according to a second aspect of the invention comprises the following steps:
mixing calcined lime with water;
adding a sludge mass to the mixture of calcined lime and water, the sludge mass comprising grinding chips of a ferrous metal and a grinding fluid containing oil and water; and
stirring the sludge mass.

In the manufacturing method of the ferrous powder material according to the second aspect hereof, the sludge mass comprising the grinding chips of the ferrous metal and the grinding fluid containing oil and water is added to the mixture of calcined lime and water and then, the sludge mass is stirred. In this process, the calcined lime reacts with water so as to generate hydrated lime and an enormous amount of heat. The heat raises the temperature of the sludge mass, causing much of the water contained in the sludge mass to evaporate and much of the oil to be enclosed by the hydrated lime so generated.
Hence, the sludge mass is powderized with the progress of the reaction between the calcined lime and water. The resultant powdery mass (ferrous powder material) can be compression molded by the conventional compression molding press so that the brittle compact may be formed from the above ferrous powder material.

Because of the same reason as explained above, it is preferred that aluminum powder along with the calcined lime and water are added to the sludge mass. It is also preferred that the calcined lime comprises particles having a particle size of 1 mm to 3 mm.

A briquette for use as steelmaking material according to the invention is obtained by drying a brittle compact formed by compression molding a mixture of the above ferrous powder material and a non-sludge cotton-like aggregate comprising grinding chips of a ferrous metal and a grinding fluid containing oil and water.

The briquette for use as steelmaking material according to the invention is obtained by drying the brittle compact formed by compression molding the mixture of the above ferrous powder material made from the mentioned sludge mass and the non-sludge cotton-like aggregate comprising the grinding chips of the ferrous metal and the grinding fluid containing oil and water.
The above ferrous powder material has large percentages of the other components than iron constituting the steelmaking material, the other components exemplified by hydrated lime generated in conjunction with the powderization. Therefore, the ferrous powder material per se cannot be used as a recyclable material.
However, the iron content of the briquette may be increased by compression molding the mixture of this ferrous powder material and the non-sludge cotton-like aggregate. This permits the resultant briquette to be used as a recycled valuable resource. The term "non-sludge" as used herein means a state which has an oil percentage on the order of 1 to 12 wt% so that the grinding chips are easily separated from the grinding fluid and which permits the compression molding by means of the compression molding press shown in FIG. 4.

### Brief Description of Drawings

- FIG. 1: graphically shows an exothermic reaction between a simple substance of calcined lime and water, and an exothermic reaction of calcined lime, water and aluminum powder;
- FIG. 2: is a step chart showing the steps of an exemplary manufacturing process of a briquette according to the invention;
- FIG. 3: is a step chart showing the steps of another exemplary manufacturing process of a briquette according to the invention; and
- FIG. 4: is an illustration of a compression molding press applicable to the compression molding of cotton-like aggregate.

### Best Mode for Carrying Out the Invention

A ferrous powder material and a manufacturing method thereof as well as a briquette for use as steelmaking material according to the invention will hereinbelow be described in details with reference to the accompanying drawings.

### Ferrous Powder Material

The ferrous powder material of the invention is a powdery material prepared by stirringly mixing a sludge mass with calcined lime and water, the sludge mass comprising grinding chips of a ferrous metal and a grinding fluid containing oil and water. The powdery material may be compression molded by means of a compression molding press shown in FIG. 4.

Since the above "sludge mass" has such a high oil content of 13 wt% or more that the grinding chips cannot be separated from the grinding fluid because of the high viscosity of the sludge mass. Accordingly, the sludge mass assumes a sludge-like nature, It is difficult for the aforementioned compression molding press to compression mold this sludge mass.
In the above sludge mass, the oil in the grinding fluid binds to the grinding chips so strongly that the compression process cannot squeeze out the grinding fluid alone. If such a sludge mass is subjected to compression molding, the cotton-like sludged aggregate per se erupts from the fluid discharge path. Thus, the compression molding of the sludge mass fails.

On the other hand, the present inventors have discovered that the above sludge mass may be effectively powderized by utilizing heat generated by a reaction between calcined lime and water. As added with water, the calcined lime (CaO) generates heat and calcium hydroxide (hydrated lime):

CaO + H₂O → Ca(OH)₂ + Heat.

The generated heat raises the temperature of the sludge mass, causing much of the water contained in the sludge mass to evaporate and much of the oil to be enclosed by the hydrated lime. Therefore, the sludge mass is powderized with the progress of the reaction between the calcined lime and water. It is necessary to stir the mixture of the sludge mass, calcined lime and water in order to sustain and promote this exothermic reaction. It is therefore favorable to powderize the sludge mass in a vessel equipped with a stirring mechanism.

The amounts of calcined lime and water are not particularly limited in the invention and may be properly selected according to the water content of the sludge mass. As a rough guide, calcined lime may be added in an amount of 20 g to 40 g per 100 g of sludge mass, while the amount of water may be about 1.5 times, or preferably 1.3 to 1.7 times the amount of calcined lime.

When the calcined lime and water are reacted with each other, adding aluminum powder further accelerates the exothermic reaction so that the sludge mass may be quickly and efficiently powderized. This is because the aluminum powder generates an enormous amount of heat when generating hydrogen by reacting with water in an aqueous solution of alkaline hydrated lime.
As a rough guide, the amount of aluminum powder is about 15 g per 100 g of calcined lime (a preferred amount thereof is 12 to 18 wt% of the amount of calcined lime).

Al + OH⁻ + H₂O → AlO₂ + 1.5H₂ + Heat.

While the size of the above calcined lime particles is not particularly limited in the invention, the calcined lime may preferably comprise particles having a particle size of 1 mm to 3 mm. If the calcined lime having high reactivity is in the form of powder having a small particle size, the powdery calcined lime reacts with vapor in the atmosphere during storage or transportation so that the powdery calcined lime becomes unable to develop an adequate exothermic reaction when used. On the other hand, if the calcined lime is in the form of a large block, the block-like calcined lime is able to suppress such a prior-to-use reaction.
However, if the block-like calcined lime is used in an as-is state, the calcined lime has such a small area of contact with water, thus failing to generate a required amount of heat. Therefore, the calcined lime blocks must be crushed before use, which is cumbersome. In contrast, the calcined lime particles having the particle size of 1 mm to 3 mm is able to suppress the unwanted reaction during storage and transportation and to attain an increased area of contact with water for adequately reacting with water.

The order of adding the sludge mass, calcined lime, aluminum powder and water is described. It is possible to add calcined lime or a mixture of calcined lime and aluminum power to the sludge mass, followed by adding water. However, the reactivity may be further increased by taking a procedure of adding water to calcined lime or the mixture of calcined lime and aluminum power for initiating the exothermic reaction, followed by adding the sludge mass.

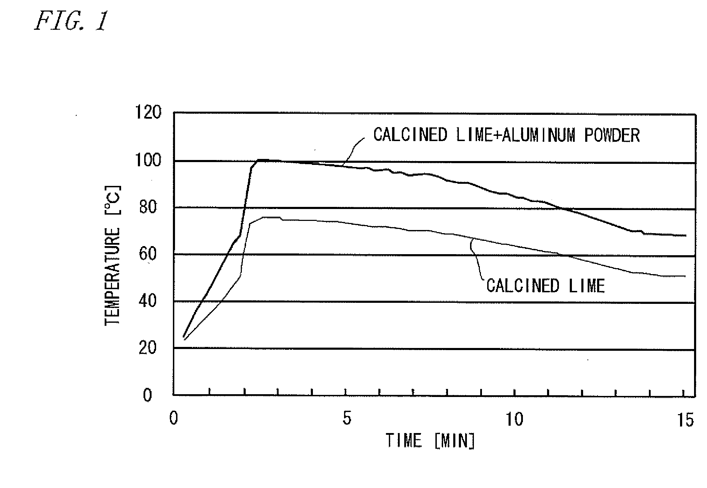

FIG. 1 graphically shows an exothermic reaction between a simple substance of calcined lime and water, and an exothermic reaction wherein aluminum powder is added to calcined lime and water. The amounts of calcined lime and aluminum powder are 300 g and 50 g respectively, while the amount of water is 400 cm³.

As shown in FIG. 1, the exothermic reaction using the simple substance of calcined lime achieves the maximum temperature of 74 °C to 76 °C, whereas the exothermic reaction wherein the aluminum powder is added to calcined lime achieves the maximum temperature of 99 °C to 100 °C. In either case, a violent reaction starts to raise temperature at once.
Specifically, the temperature which was on the order of 23 °C to 24 °C at the reaction start reached the maximum level in a few minutes from the reaction start. In the reaction using the simple substance of calcined lime, the temperature was maintained at 60 °C or above for 10 minutes or so. In the reaction wherein the aluminum powder was added to calcined lime, the temperature was maintained at 80 °C or above for 10 minutes or so.

It is found that although the mixing ratio of the aluminum powder does not significantly vary the temperature of generated heat, reaction time can be extended longer if the amount of the aluminum powder is increased.

Next, description is made on the examples of the ferrous powder material of the invention. Three types of sludge masses A, B, C used in the examples come from the following three practical processes. Examples 1 to 3 used the sludge mass A, Examples 4 and 5 used the sludge mass B, and Example 6 used the sludge mass C.

**Table 1**

| | Process | Grinding fluid |
|---|---|---|
| A | Superpolishing of inner ring | Oil-based |
| B | Polishing of roller (ball) | Oil-based |
| C | Roller barrel finishing | Water-soluble |

In each example, calcined lime and aluminum powder were blended in a mixing ratio shown in Table 2, Immediately after an exothermic reaction had been started by adding water to the mixture, 300 g of sludge mass was charged and stirringly mixed.

**Table 2**

| | Ex.1 | Ex.2 | Ex.3 | Ex.4 | Ex.5 | Ex.6 |
|---|---|---|---|---|---|---|
| Sludge (g) | A:300 | | | B:300 | | C:300 |
| Calcined lime (g) | 60 | 90 | 120 | 90 | 120 | 60 |
| Al powder (g) | 10 | 15 | 20 | 15 | 20 | 10 |
| Water (cm³) | 80 | 120 | 160 | 120 | 160 | 80 |
| Evaluation | □ | □ | □ | ○ | □ | □ |
| Post-reaction weight (g) | 410 | 470 | 535 | 470 | 525 | 400 |

In each of Examples 1 to 6, the sludge mass was powderized in 10 to 15 minutes from the reaction start, While the results were evaluated according to the following criteria, all the examples were rated as □ or ○.

### Evaluation Criteria:

- □:: powder mass totally free from oil
- ○:: powder mass containing some lumps formed because of the inclusion of oil or water
The ferrous powder material resulting from the reaction was increased in weight by 30 % to 80 % because the material contained the generated hydrated lime and the like.
A componential analysis was performed on the powder material of Example 3 in order to determine the changes of the components of the pre-reaction sludge mass and the post-reaction sludge mass. The results are shown in Table 3.

**Table 3**

| | Pre-exothermal reaction | | | Post-reaction | |
|---|---|---|---|---|---|
| Sludge (g) | 300 | 50.0% | (100.0%) | | |
| Iron (g) | 134,5 | 22.4% | (44.8%) | 136.4 | 26.0% |
| Oil (g) | 79.8 | 13.3% | (26.6%) | 32.3 | 6.1% |
| Remainder(g) | 85.7 | 14.3% | (28.6%) | 350.0 | 66.7% |
| Water (cm³) | 160 | 26.7% | | 6.3 | 1.2% |
| C lime (g) | 120 | 20.0% | | | |
| Al powder(g) | 20 | 3.3% | | | |
| Total (g) | 600 | 100% | | 529.6 | 100% |

Calculating from the amounts of calcined lime and aluminum powder added to the sludge mass and the amount of added water, a theoretical value of hydrated lime and aluminum compound (AlO₂) resulting from the exothermic reaction is 232.4 g. Adding 85.7 g as the amount of impurities contained in the pre-exothermic reaction sludge mass to this theoretical value gives 318.2 g. This value is near 350.0 g representing the amount of the impurities determined after exothermic reaction, which indicates that the exothermic reaction was carried out substantially based on the theory.

The oil content of 79.8 g prior to the exothermic reaction is decreased to 32.3 g after the exothermic reaction, indicating that the oil is reduced by about 60%. It was confirmed from this that the exothermic reaction is effective for removing the oil from the sludge mass.
It is noted however that after the exothermic reaction, the sludge mass is increased in weight due to the generated hydrated lime and the like, so that the sludge mass is decreased in the percentage of iron and is lowered in quality as a valuable resource.
It is therefore difficult to put the resultant sludge mass per se on a marketing route for recycled product. As will be described hereinlater, however, the iron content may be increased by compression molding a mixture of the ferrous powder material offered by the invention and a non-sludge cotton-like aggregate, whereby the resultant briquette may be offered as a recycled valuable resource.

### Briquette for Use as Steelmaking Material

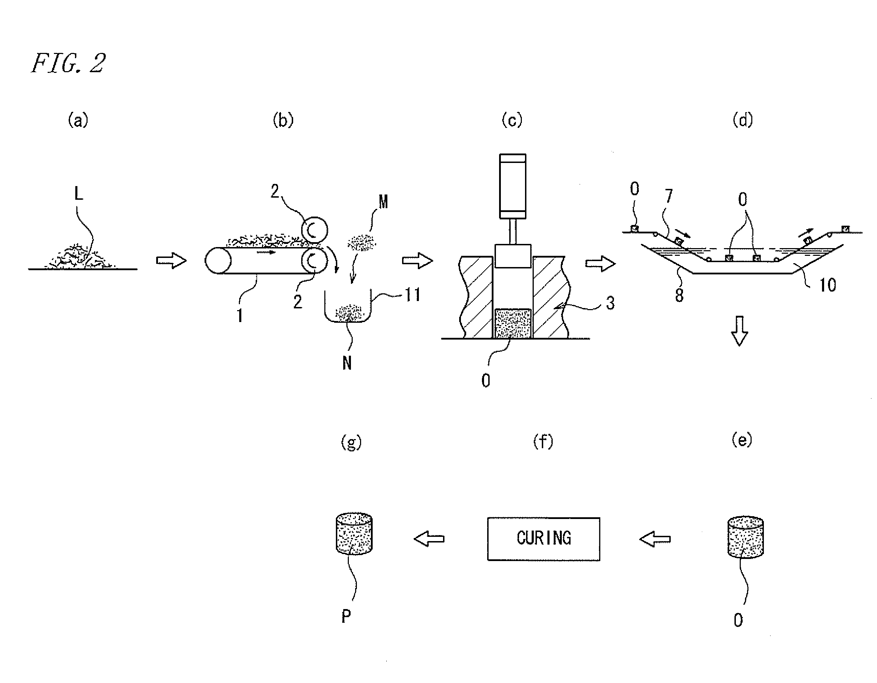

FIG. 2 is a step chart showing the steps of an exemplary manufacturing process of a briquette for use as steelmaking material according to the invention (hereinafter, simply referred to as "briquette").
A briquette **P** manufactured by the steps shown in FIG. 2 is obtained by the steps of: forming a brittle compact **O** by compression molding a mixture of the aforementioned ferrous powder material **M** and a non-sludge cotton-like aggregate **L** including grinding chips of a ferrous metal and a grinding fluid containing oil and water; impregnating the brittle compact **O** with a solidification assistant 10; and drying the resultant brittle compact **O**. The briquette **P** is formed in a circular cylinder shape.

In the manufacture of the briquette **P** of the invention, the cotton-like aggregate **L** (refer to FIG. 2(a)) of the grinding chips resulting from the grinding of the ferrous metal is first compressed under pressure for preliminarily adjusting the contents of water and oil which are the components of the grinding fluid contained in the cotton-like aggregate **L.** The compression of the cotton-like aggregate **L** under pressure is accomplished by, for example, clamping the aggregate between a pair of rolls 2 as carrying the aggregate on a belt conveyor 1 (FIG. 2(b)).
In this process, it is favorable to condition the cotton-like aggregate **L** in a manner that the water content does not exceed 50 wt% and the oil content does not exceed 10 wt%. Thus are offered easy handlings of the resultant cotton-like aggregate **L,** such as the transportation and storage thereof. The method of preliminarily adjusting the water content and oil content includes a method wherein the adjustment is made simply by applying air blow onto the aggregate or air-compressing the aggregate, a method using a magnet-type separator, and the like.

The cotton-like aggregate **L** passed through the rolls 2 is discharged into a mixing vessel 11. In synchronism with the discharge of the aggregate, a predetermined amount of ferrous powder material **M** mentioned above is fed into the mixing vessel 11. The mixing ratio of the cotton-like aggregate **L** and the ferrous powder material **M** varies depending upon the respective compositions of the cotton-like aggregate **L** and the ferrous powder material **M** and upon the iron content required of the briquette **P** serving as the valuable resource. As a rough guide, 800 g to 850 g of ferrous powder material **M** may be added per 100 g of cotton-like aggregate **L.**

Subsequently, the mixture of the cotton-like aggregate **L** and the ferrous powder material **M** is compression molded by means of a press using a mold 3, thereby forming the brittle compact **O** (FIG. 2(c)). The compression molding process roughly shears the spiral fibrous grinding chips contained in the cotton-like aggregate **L.** This molding process also removes excessive water and oil so that the brittle compact **O** is so conditioned as to have a water content of 2 to 12 wt% and an oil content of 1 to 5 wt%.
Thus, the oxidization of the grinding chips may be effectively prevented by way of the minimum possible amount of residual oil. Since the water content and the oil content of the cotton-like aggregate **L** are adjusted to 50 wt% or less and 10 wt% or less by the previous step, the water content and the oil content of the brittle compact **O** may be easily and properly adjusted by the compression molding alone.

According to the invention, the mixture of the cotton-like aggregate **L** and the ferrous powder material **M** is compression molded. Since hydrated lime contained in the ferrous powder material **M** absorbs the water and oil in the cotton-like aggregate **L,** an effect is obtained that the brittle compact **O** thus formed has a greater hardness than a brittle compact formed from the cotton-like aggregate **L** alone.

The brittle compact **O** is formed in a circular cylinder shape which is easy to handle, and is also hardened to such a strength that the brittle compact will not collapse when sent to the subsequent step. Besides the circular cylinder shape, the brittle compact may also have any other shape such as a sphere shape, a square column shape, pillow shape or the like.

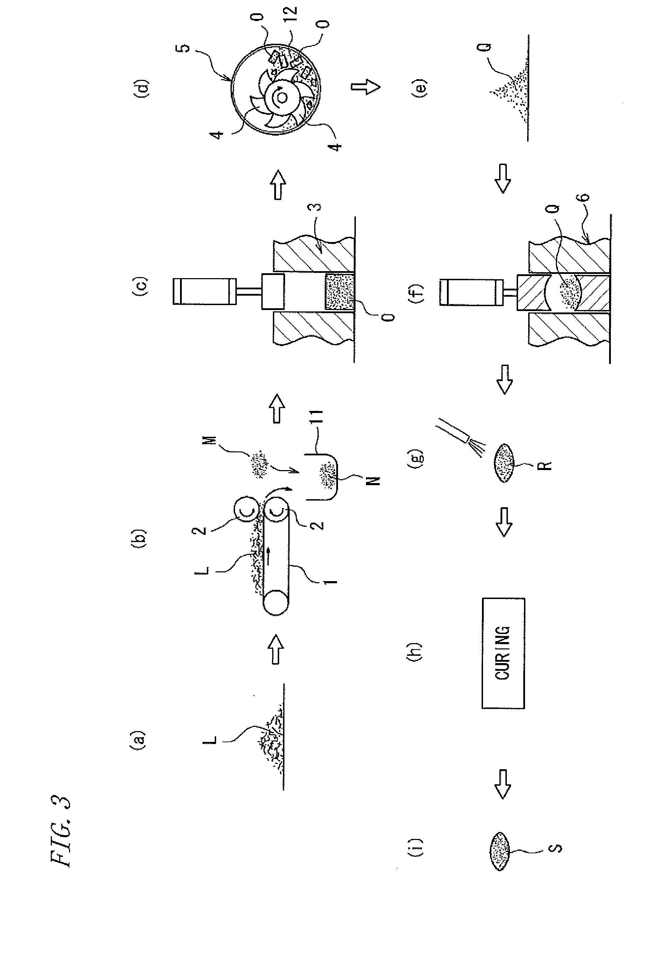

Subsequently, the brittle compact **O** is impregnated with the liquid solidification assistant 10. The impregnation with the solidification assistant 10 is accomplished by, for example, dipping the brittle compact **O** in the solidification assistant 10 filled in a tank 8 as carrying the brittle compact **O** on a belt conveyor 7 (FIG. 3(d)). The solidification assistant 10 employed by this manufacturing method may preferably be at least one selected from the group consisting of colloidal silica, silicate of soda and aluminum phosphate, such that the brittle compact **O** may be easily but rigidly solidified.

Subsequently, the brittle compact **O** impregnated with the solidification assistant 10 (FIG. 3(e)) is allowed to cure (dry) (FIG. 3(f)). Thus is obtained the briquette **P** for use as steelmaking material (FIG. 3(g)).
The briquette **P** manufactured by the aforementioned steps is a porous mass formed by solidifying the mixture of the cotton-like aggregate **L** and the ferrous powder material **M.** Therefore, the briquette **P** may be easily and assuredly removed of the water contained therein by curing.
Accordingly, the briquette involves no fear of causing bumping or of being scatteringly carried upward to be discharged from the blast furnace if it is directly charged into the furnace. Further, the briquette is adapted for the effective prevention of the oxidization of pure iron because the briquette is processed as retaining a part of the oil of the grinding fluid at all times. In addition, the briquette is a solid mass which facilitates the transportation and other handlings thereof.

FIG. 3 is a step chart showing the steps of another exemplary manufacturing process of a briquette according to the invention. This exemplary manufacturing process differs from the exemplary manufacturing process shown in FIG. 2 in that a brittle compact once formed is powderized along with the solidification assistant and the resultant powder mass is compression molded again. In the manufacturing process shown in FIG. 3, the brittle compact **O** is formed from the mixture of the cotton-like aggregate **L** and the ferrous powder material **M** in the same way as in the manufacturing process shown in FIG. 2 (FIG. 3(a) to FIG. 3(c)).

Subsequently, the above brittle compact **O** together with a solidification assistant 12 are charged in a mixer 5 equipped with a chopper having rotary blades 4 (or a Henschel mixer) for crushing (see Fig.3(d)). Thus, the grinding chips in the brittle compact **O** is further finely sheared (finish shearing) whereby a powder mass **Q** containing powdery pure iron and the solidification assistant 12 may be obtained (FIG. 3(e)).
The powdery pure iron in the cotton-like aggregate **L** has a greater diameter of the order of 3 µm to 1000 µm. In the crushing of the brittle compact **O**, the finish shearing may be smoothly accomplished because the fibrous grinding chips in the brittle compact **O** is roughly sheared in advance. In a case where the fibrous grinding chips in the brittle compact **O** are not roughly sheared, it is extremely difficult for the above mixer 5 to crush the brittle compact **O**. It is therefore impossible to obtain a fine powder mass **Q.**

The above solidification assistant 12 may preferably be one or more than one selected from the group consisting of: rice polishings (refined rice polishings); blackstrap molasses such as from sugar cane; starches such as potato starch and corn starch; calcined lime; coloidal silica; silicate of soda; aluminum phosphate; vinyl acetate sludge; asphalt emulsion; and bentonite. Such a solidification assistant 12 may preferably be present in concentrations of 2 to 30 wt%.
The rice polishings and blackstrap molasses are particularly preferred as the solidification assistant 12 because they are effective to prevent the deterioration of the powdery pure iron which is present in the powder mass **Q** in large quantity, and are less costly. After kneading, the asphalt emulsion is separated into an asphalt component and water, the asphalt component exhibiting a caking property which develops strength. Anionic asphalt may be preferably used as the asphalt emulsion.

Subsequently, a predetermined amount of powder mass **Q** mentioned above is compression molded by means of a press using a mold 6 (FIG. 3(f)), thereby forming a water-containing briquette **R** which is rich in pure iron and is substantially shaped like a pillow. In the compression molding of the powder mass **Q,** the pure iron particles with oil adhered thereto are firmly bound together via the water contained in the solidification assistant 12 and powder mass **Q** whereby the powder mass **Q** can be solidified.
Particularly, in a case where the powder mass **Q** contains 5 to 6 wt% of water, 4 wt% of rice polishings and 2 wt% of blackstrap molasses or where the powder mass **Q** contains 7 to 15 wt% of water and 2 to 10 wt% of vinyl acetate sludge, there may be obtained water-containing briquettes **R** more rigidly solidified.

The phrase "substantially shaped like a pillow" means a shape having a rounded circumferential end and gradually increased in thickness from the circumferential end toward its center. The shape includes those of eggs, almond, rugby ball and the like. The briquette **R** which is hard to collapse withstanding compressive load and is less prone to partial fracture at a corner portion thereof or the like may be obtained by molding the powder mass into such a shape.

The water-containing briquette **R** fresh from the compression molding process is cooled quickly by applying thereto an air blow at normal temperatures or a cooled air blow (FIG. 3(g)). This permits the water-containing briquette **R** to be solidified readily and stably.
Subsequently, the water-containing briquette **R** is allowed to cure (dry) for removal of the water contained therein (FIG. 3(h)), whereby the briquette S for use as steelmaking material is obtained (FIG. 3(i)). It is preferred to carry out the curing process for two days or so because the water contained in the briquette is assuredly removed.

The briquette **S** formed by the aforementioned steps may offer the same effect as the briquette **P** formed by the manufacturing method shown in FIG. 2.

## Claims

1. . A ferrous powder material, comprising:
- grinding chips of a ferrous metal, and
- prepared by stirringly mixing, a sludge mass with calcined lime and water, the sludge mass comprising the grinding chips of the ferrous metal and a grinding fluid containing oil and water.

2. . The ferrous powder material according to Claim 1,
prepared by stirringly mixing the sludge mass with calcined lime, aluminum powder and water.

3. . The ferrous powder material according to Claim 1 or 2,
wherein the calcined lime comprises particles having a particle size of 1 mm to 3 mm.

4. . A manufacturing method of a ferrous powder material,
comprising the following steps:
- adding calcined lime and water to a sludge mass comprising grinding chips of a ferrous metal and a grinding fluid containing oil and water; and
- stirring the sludge mass admixed with calcined lime and water.

5. . The manufacturing method of the ferrous powder material according to Claim 4,
wherein aluminum powder along with the calcined lime and water are added to the sludge mass.

6. . The manufacturing method of the ferrous powder material according to Claim 4 or 5,
wherein the calcined lime comprises particles having a particle size of 1 mm to 3 mm.

7. . A manufacturing method of a ferrous powder material,
comprising the following steps:
- mixing calcined lime with water;
- adding a sludge mass to the mixture of calcined lime and water, the sludge mass comprising grinding chips of a ferrous metal and a grinding fluid containing oil and water; and
- stirring the sludge mass.

8. . The manufacturing method of the ferrous powder material according to Claim 7,
wherein the calcined lime and water and in addition, aluminum powder are mixed together.

9. . The manufacturing method of the ferrous powder material according to Claim 7 or 8,
wherein the calcined lime comprises particles having a particle size of 1 mm to 3 mm.

10. . A briquette for use as steelmaking material obtained by drying a brittle compact formed by compression molding a mixture of the ferrous powder material according to any one of Claims 1 to 3 and a non-sludge cotton-like aggregate comprising grinding chips of a ferrous metal and a grinding fluid containing oil and water.
